Europäisches Patentamt

**European Patent Office**

**Office européen des brevets**

(11) Publication number: **0 080 753**

**A1**

(12) # EUROPEAN PATENT APPLICATION

(21) Application number: **82201412.2**

(22) Date of filing: **09.11.82**

(51) Int. Cl.³: **G 01 N 27/56**

(30) Priority: **10.11.81 GB 8133889**

(43) Date of publication of application:
**08.06.83 Bulletin 83/23**

(84) Designated Contracting States:
**AT BE CH DE FR GB IT LI LU NL SE**

(71) Applicant: **FISONS plc**
**Fison House Princes Street**
**Ipswich Suffolk IP1 1QH(GB)**

(72) Inventor: **Molloy, James Oscar**
**5 The Crescent**
**Belmont Surrey, SM2 6BP(GB)**

(72) Inventor: **Sydenham, Peter Edward**
**54 Chester Road**
**Wanstead London E11(GB)**

(74) Representative: **Craig, Christopher Bradberry et al,**
**Fisons plc 12 Derby Road**
**Loughborough Leicestershire LE11 0BB(GB)**

(54) **Measuring device and method.**

(57) An ionic concentration measuring device and in particular a device for measuring pH which comprises a measuring half cell (1), a reference half cell (4), means for determining the voltage difference between the measuring half cell (1) and the reference half cell (4), a thermistor (5), positioned in thermal contact with the solution being tested, and means for adjusting the reading of the voltage between the half cells according to the temperature of the thermistor (5) so as to achieve automatic temperature correction.

*Fig.1.*

Croydon Printing Company Ltd

TITLE:  MEASURING DEVICE AND METHOD

This invention relates to devices which are sensitive to the concentration of ions in solution and which may be used to determine the concentration of these solutes.

Devices are known which use electrodes comprised of two half cells, one being a reference cell and the other a measuring cell.  The specificity of the device to a given ionic species is conferred by interposing between the measuring half cell and the solution under examination some specific selector for the ionic species being measured.  The two half cells together generate a voltage proportional to the inverse logarithm of the concentration of those ions which pass through the ionic selection device in the measuring half cell, according to the Nernst equation.  A variable factor in this equation is temperature and provision must be made for the correction of the voltage generated by the two half cells.

Previously, in many devices, temperature correction was achieved by the use of a preset control which altered the gain of the measuring circuitry connected between the sensor and a readout device and which was adjusted according to the temperature of the test solution.  A thermometer separate from the measuring device has been required to monitor temperature changes in the test solution.

We have now found such a device in which a thermistor is used to determine temperature.

Accordingly, the invention provides an ionic concentration measuring device which comprises a measuring half cell, a reference half cell, means for determining the voltage difference between the measuring half cell and the reference half cell, a thermistor adapted to be in thermal contact with the solution to be tested, and means for adjusting the reading of the voltage difference between the half cells according to the temperature of the thermistor.

It is an advantage of the thermistor that it may be located within the electrode thus ensuring both that the temperature is read at a point close to the point where the ionic concentration is determined and that the thermistor is protected from physical damage.

A further considerable advantage of a thermistor is that its change in resistance according to temperature may be used to correct automatically the voltage generated by the two cells for temperature variation.

Preferably, the means for adjusting the reading of the voltage difference between the half cells according to the temperature of the thermistor are automatic means.

Preferably the thermistor is located in the reference half cell or in the measuring half cell.

In particular, the invention provides such a sensor for the measuring of the pH of solutions.

The sensor portion of the device may be of conventional construction and comprise an electrode comprising two half cells, one being a reference cell and the other a measuring cell. The circuitry used to measure and display the voltage developed by the two half cells may also be of conventional construction.

The measuring cell is bounded by a membrane which separates it from the test solution under examination. The membrane selects for the specific ion being measured. In the particular case of the measurement of the pH of a solution, the concentration of the hydrogen ion is being measured and the membrane is preferably constructed of glass.

The reference cell containing the reference electrolyte solution is physically close to the measuring cell and preferably surrounds it. The thermistor is located so that it is electrically isolated from the electrode but in close thermal contact with it, preferably at a point close to the reference junction of the electrode. Preferably the thermistor is located within the reference electrolyte solution.

Either a thermistor with a negative resistance coefficient or a thermistor with a positive resistance coefficient may be used.

The small size of the thermistor enables it to be located within the reference half cell. Once the sensor portion of the device has been placed in the test solution, the temperature of the reference electrolyte rapidly approaches that of the test solution. The thermistor is therefore in good thermal contact with the test solution and is located close to the point of measurement but is protected from physical damage by its position within the reference half cell.

The resistance of the thermistor will therefore vary with the temperature of the test solution.

The advantage of a thermistor over previously used sensing devices such as platinum resistance thermometers is that its resistance gain is relatively large which gives a correspondingly large gain in the measuring circuitry and renders amplification unnecessary. The gain may therefore be used for the automatic correction of the output from the electrode.

According to the Nernst equation, the output voltage is directly proportional to the temperature in $^{o}A$

$$V = V^{o} + 2.3 \frac{RT}{F} \log a_{H}{}^{+}$$

where V is the output voltage

$V_{o}$ is a constant

R is the gas constant

T is the temperature in $^{O}A$

F is the Faraday constant

$a_H+$ is activity of ions

so that the correction may be performed very simply by conventional circuitry.

Devices according to the invention are preferably adapted to operate over a temperature range of about $50^{O}C$, e.g. from 0 to $50^{O}C$.

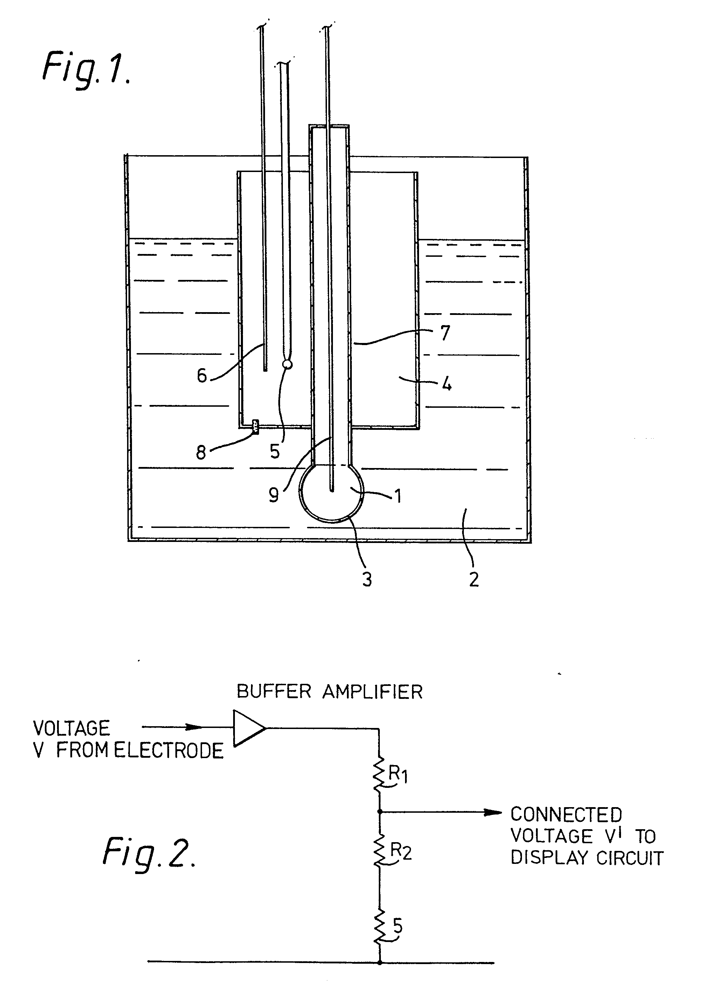

The invention will now be described though only by way of illustration, with reference to the accompanying schematic drawing, Figure 1, which is not to scale, and which shows a device for the measurement of the pH of a solution and the accompanying temperature correction circuit diagram, Fig. 2.

In Figure 1 a sensor comprising a measuring half cell 1 and a reference half cell 4 which partially surrounds the measuring half cell is placed in a solution 2 for which the pH is to be determined such that the glass membrane 3 of the measuring half cell is in contact with the solution 2.

A thermistor 5 with a negative resistance coefficient and the electrode 6 of the reference half cell are located within the reference electrolyte 7 contained in the reference half cell 4. The thermistor 5 is electrically isolated from the reference electrolyte but is in thermal contact with it.

A porous orifice 8 allows ions to move between the solution 2 and the reference electrolyte 7. The resulting voltage V generated between the electrodes 9 and 6 of the measuring and reference half cells is proportional to the inverse logarithm of the concentration of the hydrogen ions in the solution 2 and may be calculated according to the Nernst equation.

Soon after the electrode is placed in the solution 2, the temperature of the reference electrolyte 7 approaches very closely that of the solution 2. The resistance of the thermistor 5 in the reference electrolyte will therefore vary according to the temperature of the solution 2. This change in the resistance is used without the need for amplification to correct for temperature the voltage V before it is converted to a reading of the pH of the solution 2 and displayed in a conventional manner.

In Figure 2, the voltage V generated by the two half cells is passed through a buffer amplifier in order to present correct impedances to the temperature correction circuit and the electrode. The correction circuit is arranged such that the output voltage V' to the display circuit will vary as a function of the resistance of the thermistor 5.

What we claim is:-

1.  An ionic concentration measuring device which comprises a measuring half cell, and a reference half cell, means for determining the voltage difference between the measuring half cell and the reference half cell, a thermistor adapted to be in thermal contact with the solution to be tested, and means for adjusting the voltage difference between the half cells according to the temperature of the thermistor.

2.  A device as claimed in Claim 1 in which the means for adjusting the voltage difference between the half cells according to the temperature of the thermistor are automatic means.

3.  A device as claimed in Claim 1 which measures pH by measuring the concentration of hydrogen ions.

4.  A device as claimed in any of the preceding claims in which the thermistor is situated within the reference half cell or the measuring half cell.

5.  A device for measuring pH which comprises an electrode comprising a measuring half cell, a reference half cell surrounding the measuring half cell, a glass membrane adapted to be in contact with the solution under test and a porous orifice adapted to allow the passage of ions between the reference half cell and the test solution; electrical means for determining the voltage output of the electrode; a thermistor located within the reference half cell; electrical means for adjusting the voltage output of the electrode according to the resistance of the thermistor; and means for displaying the adjusted voltage output.

6. A method of determining the ionic concentration of a solution using a device as claimed in Claim 1.

Fig.1.

BUFFER AMPLIFIER

VOLTAGE
V FROM ELECTRODE

$R_1$

$R_2$

5

CONNECTED
VOLTAGE $V^1$ TO
DISPLAY CIRCUIT

Fig.2.

European Patent Office

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | DE-B-2 618 738 (F.J. HABERICH)<br>* Claim 1; figure 1, column 2, lines 15-62 * | 1,5 | G 01 N 27/56 |
| Y | DE-A-2 438 900 (SAINT-GOBAIN INDUSTRIES)<br>* Claim 1; figure 1; page 3, lines 26-33; page 4, lines 1-9, page 5, lines 20-31; page 7, lines 4-19 * | 1 | |
| Y | US-A-3 655 526 (G.D. CHRISTIAN)<br>* Figure 1; column 2, lines 49-75, column 3, lines 1-32 * | 1,5 | |
| Y | FR-A-2 382 009 (COMPAGNIE EUROPEENNE DE TRAITEMENT DES EAUX ET LABORATOIRE A. CHIMIE DES EAUX ET DE L'ENVIRONNEMENT DE L'ECOLE NATIONALE DE CHIMIE DE RENNES)<br>* Claim 1 * | 1 | TECHNICAL FIELDS SEARCHED (Int. Cl. ³)<br><br>G 01 N 27/00<br>G 01 N 33/00 |
| Y | US-A-4 240 879 (J.V. DOBSON)<br>* Claim 1; figures 5,6; column 5, lines 48-68, column 6, lines 1-41 * | 1 | |
| A | . | 3 | |
| | --- -/- | | |

The present search report has been drawn up for all claims

| Place of search<br>BERLIN | Date of completion of the search<br>04-02-1983 | Examiner<br>DIETRICH A. |
|---|---|---|

## EUROPEAN SEARCH REPORT

| | | | |
|---|---|---|---|

**DOCUMENTS CONSIDERED TO BE RELEVANT**

Page  2

| Category | Citation of document with indication, where appropriate, of relevant passages | Relevant to claim | CLASSIFICATION OF THE APPLICATION (Int. Cl. ³) |
|---|---|---|---|
| A | US-A-4 189 367  (J.G.  CONNERY et al.)<br>* Figure 1, column 2, lines 25-28 * | 1,2,4 | |
| | ----- | | |

**TECHNICAL FIELDS SEARCHED (Int. Cl. ³)**

The present search report has been drawn up for all claims

| Place of search<br>BERLIN | Date of completion of the search<br>04-02-1983 | Examiner<br>DIETRICH A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82